(19) Europäisches Patentamt
European Patent Office
Office européen des brevets

(11) Publication number: **0 550 208 A1**

# (12) EUROPEAN PATENT APPLICATION

(21) Application number: **92311458.1**

(22) Date of filing: **15.12.92**

(51) Int. Cl.⁵: **C08L 71/12**, C08L 67/02, C08K 5/20, //(C08L71/12,67:02), (C08L67/02,71:12)

(30) Priority: **31.12.91 US 815211**

(43) Date of publication of application: **07.07.93 Bulletin 93/27**

(84) Designated Contracting States: **DE ES FR GB IT NL**

(71) Applicant: **GENERAL ELECTRIC COMPANY**
**1 River Road**
**Schenectady, NY 12345(US)**

(72) Inventor: **Yates, John Bennie, III**
**38 Chrisken Drive**
**Glenmont, New York 12077(US)**

(74) Representative: **Pratt, Richard Wilson et al**
**London Patent Operation G.E. Technical Services Co. Inc. Essex House 12/13 Essex Street**
**London WC2R 3AA (GB)**

## (54) Polyphenylene ether/polyester compositions.

(57) Thermoplastic compositions comprise a polyphenylene ether polymer, a polyalkylene terephthalate polymer and a fatty acid amide formed from at least one fatty acid having from 4 to 22 carbon atoms. The fatty acid amide improves various physical properties, for example, the low temperature ductility and/or processability, of the compositions.

EP 0 550 208 A1

## FIELD OF THE INVENTION

The present invention relates to thermoplastic compositions comprising a polyphenylene ether polymer, a polyalkylene terephthalate polymer and a fatty acid amide formed from at least one fatty acid having from 4 to 22 carbon atoms.

## BACKGROUND OF THE INVENTION

Polyphenylene ether resins are well known in the art and exhibit a desirable combination of chemical, physical and electrical properties over a wide temperature range. This combination of properties renders polyphenylene ether resins suitable for use in a broad range of applications. Often times, polyphenylene ether resins are blended with other resins to improve one or more properties of the polyphenylene ether resins and increase their fields of application. PCT Published Application 87/850 describes blends of polyphenylene ether resins and polyesters, and discloses that polyesters such as poly(alkylene dicarboxylates), particularly poly(alkylene terephthalates), can be added to polyphenylene ether resins in order to improve the resistance of the polyphenylene ethers to non-polar solvents such as gasoline.

## SUMMARY OF THE INVENTION

Accordingly, it is an object of the present invention to provide thermoplastic blend compositions comprising a polyphenylene ether polymer and a polyalkylene terephthalate polymer, which blends exhibit an advantageous combination of properties to facilitate their use in a variety of applications. It is a more specific object of the invention to provide such blend compositions which exhibit improved ductility, particularly low temperature ductility, to allow their use in low temperature applications. It is a further object of the invention to provide such compositions with a reduced viscosity in order to facilitate processability.

These and additional objects are provided by the thermoplastic compositions of the present invention which comprise a polyphenylene ether polymer, a polyalkylene terephthalate polymer and a fatty acid amide formed from at least one fatty acid having from 4 to 22 carbon atoms. The fatty acid amide may be included in the compositions in amounts which improve the low temperature ductility of the compositions so that the compositions may be employed in applications requiring low temperature exposure. Additionally, the fatty acid amides may be included in the compositions in amounts sufficient to reduce the viscosity of the compositions, thereby improving the processability of the compositions.

These and additional objects and advantages will be more fully apparent in view of the following detailed description.

## DETAILED DESCRIPTION

The compositions of the invention comprise blends of a polyphenylene ether polymer, a polyalkylene terephthalate polymer and a fatty acid amide.

Polyphenylene ether resins are well known in the art and are generally of the formula

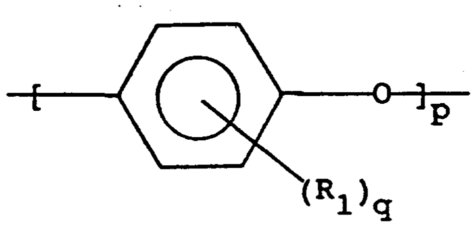

wherein each $R_1$ is individually selected from the group consisting of halogen, alkyl, aryl and alkoxy, q is from 0 to 4 and p is at least 20. When $R_1$ comprises an alkyl group, an aryl group or an alkoxy group, the group suitably contains from about 1 to about 12 carbon atoms.

The polyphenylene ether polymers suitable for use in the present invention are well known in the art and may be prepared by any of a number of processes known in the art from corresponding phenols or reactive derivatives thereof. Examples of polyphenylene ether resins and methods for their production are set forth in the Hay U. S. Patents Nos. 3,306,874 and 3,306,875, in the Stamatoff U. S. Patents Nos. 3,257,357 and 3,257,358, and in U. S. Patent No. 4,935,472 of S. B. Brown et al, all of which are

incorporated herein by reference. Throughout the specification and claims the term "polyphenylene ether resin" includes unsubstituted polyphenylene ether polymers, substituted polyphenylene ether polymers (wherein the aromatic ring is substituted), polyphenylene ether copolymers and blends thereof.

Preferred polyphenylene ether polymers adapted for use in the present invention include, but are not limited to, poly(2,6-dimethyl-1,4-phenylene)ether; poly(2,3,6-trimethyl-1,4-phenylene) ether; poly(2,6-diethyl-1,4-phenylene)ether; poly(2-methyl-6-propyl-1,4-phenylene)ether; poly(2,6-dipropyl-1,4-phenylene)ether; poly(2-ethyl-6-propyl-1,4-phenylene)ether; poly(2,6-dilauryl-1,4-phenylene)ether; poly(2,6-diphenyl-1,4-phenylene)ether; poly(2,6-dimethoxy-1,4-phenylene)ether; poly(2,6-diethoxy-1,4-phenylene)ether; poly(2-methoxy-6-ethoxy-1,4-phenylene)ether; poly(2-ethyl-6-stearyloxyl-1,4-phenylene)ether; poly(2,6-dichloro-1,4-phenylene)ether; poly(2-methyl-6-phenyl-1,4-phenylene)ether; poly(2,6-dibenzyl-1,4-phenylene)ether; poly(2-ethoxy-1,4-phenylene)ether; poly(2-chloro-1,4-phenylene) ether; poly(2,6-dibromo-1,4-phenylene)ether; poly-(3-bromo-2,6-dimethyl-1,4-phenylene)ether, copolymers thereof and mixtures thereof, and the like. Particularly preferred polyphenylene ether polymers for use in the compositions of the present invention include poly(2,6-dimethyl-1,4-phenylene) ether, poly(2,3,6-trimethyl-1,4-phenylene)ether, blends of these polymers and copolymers including units of 2,3,6-trimethyl-1,4-phenylene ether and units of 2,6-dimethyl-1,4-phenylene ether. Examples of such polymers and copolymers are also set forth in U. S. Patent No. 4,806,297.

In an alternate embodiment, the polyphenylene ether polymer may be functionalized (i.e., capped) in a manner known in the art. For example, the polyphenylene ether polymer may be epoxy-functionalized in a manner set forth in commonly assigned applications Serial No. 07/351,903 and Serial No. 07/351,905, both of which are incorporated herein by reference. Briefly, the epoxy-functionalized polyphenylene ether polymers are functionalized or capped with an epoxy triazine compound at the end of the polymer molecules. Epoxidized triazine compounds suitable for use in preparing the epoxy-functionalized polyphenylene ether polymers are disclosed in the Brown et al U.S. Patent No. 4,895,945, also incorporated herein by reference. Alternatively, the polyphenylene ether polymer may be phosphate-functionalized, i.e., end capped with a phosphate compound. Phosphate-functionalized polyphenylene ethers are disclosed in commonly assigned applications Serial No. 07/654,444, Serial No. 07/654,443, and Serial No. 07/653,586, all of which are incorporated herein by reference. In a preferred embodiment, the phosphate-functionalized polyphenylene ethers are prepared from a phosphate-substituted triazine compound. In a further embodiment, the polyphenylene ether may be ortho-ester functionalized by use of ortho-ester substituted triazine compounds as described in commonly assigned copending applications Serial No. 07/566,025 and Serial No. 07/623,838, both of which are incorporated herein by reference.

Accordingly, the polyphenylene ether polymer included in the thermoplastic compositions of the present invention may comprise one or more functionalized or non-functionalized polyphenylene ether polymers and/or copolymers, or mixtures thereof.

The second component of the thermoplastic compositions of the present invention comprises a polyalkylene terephthalate polymer. Polyalkylene terephthalate polymers are well known in the art, and examples of these polymers are set forth in U.S. Patents Nos. 4,902,753, 4,128,526, 3,953,394, 3,671,487, 3,047,539, 2,822,348, 2,727,881, 2,720,502, and 2,465,319, all of which are incorporated herein by reference. In a preferred embodiment, the polyalkylene terephthalate polymer comprises polybutylene terephthalate. Polyethylene terephthalate and mixtures of polybutylene terephthalate and polyethylene terephthalate are also preferred for use in the present compositions.

The compositions of the present invention further include a fatty acid amide formed from at least one fatty acid having from 4 to 22 carbon atoms. As will be discussed in further detail below, the fatty acid amide improves the low temperature ductility of the compositions and/or reduces the viscosity of the compositions. The fatty acid amides suitable for use in the present invention are formed from one or more unsaturated fatty acids in a manner well known in the art. Preferably, the fatty acid amide is formed from at least one fatty acid having from about 14 to 22 carbon atoms. As is well known in the art, commercially available fatty acid amides are often formed from a mixture of fatty acids, and such fatty acid amide mixtures are also suitable for use in the present compositions. Specific fatty acid amides suitable for use in the present compositions include, but are not limited to, stearamide, arachidamide, behenamide, oleamide, erucamide, stearyl erucamide, erucyl erucamide, oleyl palmitamide, stearyl stearamide and erucyl stearamide. A particularly preferred fatty acid amide for use in the present compositions comprises oleyl palmitamide.

As is demonstrated in the examples set forth below, the fatty acid amide may be employed in an amount which improves the low temperature ductility of the present thermoplastic compositions, whereby the compositions may be used in various applications which require exposure at low temperatures. Additionally, the fatty acid amide may be employed in an amount which reduces the viscosity of the

thermoplastic compositions, whereby the compositions may be more easily processed. In a preferred embodiment, the thermoplastic compositions comprise from about 10 to about 85 weight percent of the polyphenylene ether polymer, from about 10 to 85 weight percent of the polyalkylene terephthalate polymer, and from about 0.01 to about 5 weight percent of the fatty acid amide. In a further preferred embodiment, the compositions comprise from about 15 to 75 weight percent of the polyphenylene polymer, from about 25 to about 85 weight percent of the polyalkylene terephthalate polymer and from about 0.1 to about 2.5 weight percent of the fatty acid amide.

The compositions according to the present invention may be produced according to any method known in the art. For example, the polyphenylene ether polymer and the polyalkylene terephthalate polymer may be prepared by melt mixing or compounding, with the fatty acid amide being added prior to or during melt compounding. Owing to the reduced viscosity of the compositions of the invention, the compositions may be easily formed into various products in sheet form, or may be injection molded to form various shaped articles.

The compositions of the invention may further include one or more conventional additives including, but not limited to, thermal, color, and/or hydrolytic stabilizers, antioxidants, fillers, reinforcing agents, flame retardants, and the like. Additionally, the compositions may include one or more additional polymer components to further improve one or more additional properties of the compositions, for example, impact strength, and/or to improve the compatibility of the polyphenylene ether and polyalkylene terephthalate polymer components.

For example, the compositions may further include a polycarbonate polymer for improving the compatibility of the polyphenylene ether and polyethylene terephthalate. Polycarbonates are well known in the art, as are their methods of preparation, as disclosed in the Brown et al U.S. Patent No. 4,806,297 which is incorporated herein by reference.

Among the preferred polymers of this type are the aromatic polycarbonate homopolymers. The structural units in such homopolymers generally have the formula

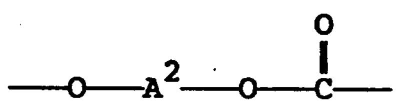

wherein $A^2$ is an aromatic radical. Suitable $A^2$ values include m-phenylene, p-phenylene, 4,4'-biphenylene, 2,2-bis(4-phenylene)propane, 2,2-bis(3,5-dimethyl-4-phenylene)-propane and similar radicals such as those which correspond to the dihydroxyaromatic compounds disclosed by name or formula (generic or specific) in U.S. Patent No. 4,217,438. Also included are radicals containing non-hydrocarbon moieties. These may be substituents such as chloro, nitro, alkoxy and the like, and also linking radicals such as thio, sulfoxy, sulfone, ester, amide, ether and carbonyl. Most often, however, all $A^2$ radicals are hydrocarbon radicals.

Various copolycarbonates are also useful. One example thereof is the polyester-polycarbonates of the type obtained by the reaction of at least one dihydroxyaromatic compound with a mixture of phosgene and at least one dicarboxylic acid chloride, especially isophthaloyl chloride, terephthaloyl chloride or both. Other examples are the siloxane-carbonate block copolymers disclosed, for example, in U.S. Patent Nos. 3,189,662 and 3,419,634, and the polyphenylene ether-polycarbonate block copolymers of U.S. Patent Nos. 4,374,223 and 4,436,876, which frequently provide compositions with substantially higher heat distortion temperatures than those containing homopolycarbonates. The disclosures of the patents listed above relating to polycarbonates and copolycarbonates are also incorporated by reference herein.

In a preferred embodiment, the compositions according to the invention comprise from about 1 to about 35 weight percent of a polycarbonate polymer.

The compositions of the invention may further include an impact modifier. Various impact modifiers are known in the art and suitable for use in the compositions of the present invention. In a preferred embodiment, the impact modifier comprises a vinyl aromatic polymer of one of the types described below. In an alternate embodiment, the impact modifier may comprise a rubber, natural or synthetic, or an elastomer, many of which are well known in the art. For example, the impact modifier may comprise an EPDM rubber, a polybutylacrylate rubber, a diene rubber, for example, polybutadiene, isoprene or the like. Compositions according to the present invention containing an impact modifier preferably contain the impact modifier in an amount of from about 1 to about 30 weight percent.

The compositions of the invention may further comprise a vinyl aromatic polymer which may optionally be an impact modifier. The vinyl aromatic polymer contains units derived from a monomer of a formula:

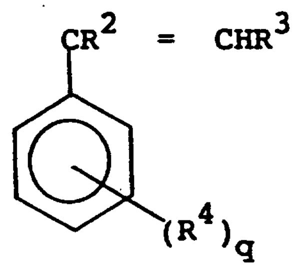

wherein $R^2$ and $R^3$ are selected from the group consisting of lower alkyl or alkenyl groups of from, for example, 1 to 6 carbon atoms and hydrogen, each $R^4$ is selected from the group consisting of halogen and lower alkyl or alkenyl groups of from, for example, 1 to 6 carbon atoms, and q is an integer of from 0 to 5. Throughout the specification and claims the term "vinyl aromatic polymer" includes unsubstituted polystyrene, substituted polystyrene and polystyrene copolymer resins. Suitable polystyrene resins include, but are not limited to, polystyrene homopolymers including atactic polystyrenes, halogenated polystyrenes, poly-alpha-methylstyrenes, poly-para-methylstyrenes; styrene-acrylonitrile copolymers, styrene-maleic anhydride copolymers, styrene-butadiene copolymers, rubber-modified polystyrenes and the like; and mixtures thereof. These vinyl aromatic polymers and their methods of preparation are well known in the art.

In one embodiment, the vinyl aromatic polymer comprises a rubber-modified polystyrene polymer, conventionally known in the art as HIPS (high impact polystyrene). The rubber-modified polystyrene polymer may be formed by addition of a rubber to a preformed polystyrene polymer or by addition of the rubber to styrene monomer which is then polymerized in the presence of the rubber. Both of these methods are well known in the art and may be employed in producing a rubber-modified polystyrene polymer for use in the present compositions.

In a further embodiment, the vinyl aromatic polymer comprises a block copolymer of a vinyl aromatic monomer and an alkene hydrocarbon monomer or a conjugated diene monomer. Various types of such block copolymers are known in the art. For example, the block copolymer may comprise a tapered linear block copolymer and generally comprises blocks of A and B, wherein A is a polymerized vinyl aromatic hydrocarbon block and B is a hydrogenated, partially hydrogenated, or non-hydrogenated block derived from at least one polymerized conjugated diene. Tapered linear block copolymers are known in the art, as are their methods of preparation, and are taught, for example, in U.S. Patents Nos. 4,948,832, 4,939,207, 4,918,145, 4,914,248, 4,913,971 and 4,116,917, all of which are incorporated herein by reference. Tapered triblock polymers are available commercially under the tradename Finaclear® 520 from Fina Oil Company.

In one embodiment, the block copolymers may be represented by the formula A-B-A wherein the terminal blocks A, which may be the same or different, are thermoplastic homopolymers or copolymers prepared from a vinyl aromatic compound. Examples of the vinyl aromatic compound include, but are not limited to, styrene, alpha-methylstyrene, vinyl toluene, vinyl xylene, ethylvinyl xylene, vinyl naphthalene and the like, or mixtures thereof. The center block B comprises an elastomeric polymer derived from alkene hydrocarbons such as ethylene or butylene, conjugated dienes or the like, or mixtures thereof. The block copolymers may be subjected to a hydrogenation process whereby the unsaturated rubber block portion B of the copolymer is hydrogenated. Hydrogenation may be accomplished using conventional hydrogenation catalysts and reaction conditions. In the hydrogenated block copolymers, the terminal blocks A may have an average molecular weight of from about 4,000 to about 115,000 while the center blocks B have an average molecular weight of from about 20,000 to about 450,000. Hydrogenated block copolymers are specifically described in the Jones U. S. Patent No. 3,431,323 and the DeLaMare et al U. S. Patent No. 3,670,054, both of which are incorporated herein by reference. Suitable block copolymers for use in the present invention comprise hydrogenated styrene-butadiene-styrene (styrene-ethylene-butylene-styrene) block copolymers and hydrogenated styrene-isoprene-styrene block copolymers. Block copolymers of this type are commercially available under the tradenames Kraton® from Shell Chemical and Septon® from Kuraray Co., Ltd.

In another embodiment, the vinyl aromatic polymer comprises a radial block copolymer of a vinyl aromatic monomer and a conjugated diene monomer. These radial block copolymers are also well known in the art. Copolymers of this type generally comprise from about 60 to about 95 percent by weight polymerized vinyl aromatic monomer and about 40 to about 5 percent by weight polymerized conjugated diene monomer. The copolymer has at least three polymer chains which formed a radial configuration, and each chain usually terminates with the substantially non-elastomeric segment, to which an elastomeric

polymer segment is joined. These block copolymers are also referred to "polymodal branched block copolymers" and "star polymers." Examples of radial block copolymers are set forth in the Kitchen et al U.S. Patent No. 3,639,517 which is incorporated herein by reference. These block copolymers are commercially available under the tradename K-Resin® from Phillips Petroleum.

Alternatively, the radial block copolymer of a vinyl aromatic monomer in a conjugated monomer may comprise a radial teleblock copolymer which contains segments or blocks which themselves comprise a conjugated diene polymer, vinyl aromatic polymer blocks, and a coupling agent. These block copolymers are sometimes referred to as "branched" polymers and are set forth in U.S. Patent No. 4,097,550, which is incorporated herein by reference. The radial teleblock copolymers are prepared by methods known in the art, for example, as disclosed in the Zelinski et al U.S. Patent No. 3,281,383, incorporated herein by reference. These polymers are also available commercially, for example, as the Finaprene® products, grades 401, 411, 414, 416 and 417, from Fina Oil Company.

When the compositions of the invention include one or more of the vinyl aromatic polymers as discussed above, it is preferred that the vinyl aromatic polymer is included in an amount of from about 1 to about 30 weight percent.

The compositions of the present invention, and improvements provided thereby, are demonstrated in the following examples. Throughout the examples and the present specification, parts and percentages are by weight unless otherwise specified.

EXAMPLE 1

In this example, Compositions 1-3 according to the present invention and Comparative Composition 4 were prepared using 30 parts by weight polyphenylene ether, 46 parts by weight polybutylene terephthalate, 8 parts by weight polycarbonate, and 16 parts by weight of a block copolymer sold commercially under the tradename Kraton® G-1651 from Shell Chemical. The compositions also included an antioxidant-stabilizer composition comprising 0.2 parts by weight Irganox® 1010 (Ciba-Geigy Corp.) and 0.40 parts by weight Seenox® 412S (Argus). Compositions 1-3 according to the present invention further included a fatty acid amide comprising Kemamide® P-181 (the major component of which comprises oleyl palmitamide) supplied by the Humko Chemical Division of Witco Chemical Corp. The compositions were prepared by melt compounding. Samples of the compositions were subjected to measurement of notched izod impact strength according to ASTM-D256 and Dynatup® strength and ductility according to a modified version of ASTM-D3763-85. The amount of fatty acid amide included in compositions 1-3, and the results of the measurements are set forth in Table I.

TABLE I

| Compositions | 1 | 2 | 3 | 4 |
|---|---|---|---|---|
| Fatty Acid Amide (pbw) | 1 | 2 | 3 | - |
| Notched Izod Impact (ft-lb/in) | 10.8 | 12.0 | 2.9 | 11.3 |
| Dynatup | | | | |
| 73°F | | | | |
| (ft-lb/in) | 45 | 42 | 43 | 46 |
| (D/B) | 5/0 | 5/0 | 5/0 | 5/0 |
| -20°F | | | | |
| (ft-lb/in) | 44 | 48 | 40 | 43 |
| (D/B) | 2/2 | 4/1 | 2/2 | 0/5 |

The results set forth in Table 1 demonstrate that the low temperature Dynatup ductility is improved in the compositions of the present invention containing the fatty acid amide as compared with Comparative Composition 4.

EXAMPLE 2

In this example, samples of Composition 2 and Comparative Composition 4 as described in Example 1 were subjected to measurement of their melt viscosity according to ASTM-D3835-79. The shear rate was varied from 1500 $sec^{-1}$ to 100 $sec^{-1}$, and the results are set forth in Table II.

TABLE II

| shear rate (1/sec) | Composition 2 (Pa.S) | Composition 4 (Pa.S) |
|---|---|---|
| 1500 | 367 | 465 |
| 1000 | 471 | 595 |
| 700 | 538 | 711 |
| 500 | 609 | 812 |
| 300 | 731 | 957 |
| 200 | 833 | 1068 |
| 100 | 988 | 1307 |

The results set forth in Table II demonstrate that Composition 2 containing the fatty acid amide exhibited a reduction in viscosity of approximately 20% as compared with Comparative Composition 4 which did not contain the fatty acid amide.

The preceding examples are set forth to illustrate specific embodiments of the invention and are not intended to limit the scope of the compositions of the present invention. Additional embodiments and advantages within the scope of the claimed invention will be apparent to one of ordinary skill in the art.

**Claims**

1. A thermoplastic composition comprising a polyphenylene ether polymer, a polyalkylene terephthalate polymer and a fatty acid amide formed from at least one fatty acid having from 4 to 22 carbon atoms.

2. A thermoplastic composition as defined by claim 1, wherein the fatty acid amide is included in an amount sufficient to improve the low temperature ductility of the composition.

3. A thermoplastic composition as defined by claim 1, wherein the fatty acid amide is included in an amount sufficient to reduce the viscosity of the composition.

4. A thermoplastic composition as defined by claim 1, comprising from about 10 to about 85 weight percent of the polyphenylene ether polymer, from about 10 to about 85 weight percent of the polyalkylene terephthalate polymer and from about 0.01 to about 5 weight percent of the fatty acid amide.

5. A thermoplastic composition as defined by claim 4, comprising from about 15 to about 75 weight percent of the polyphenylene ether polymer, from about 25 to about 85 weight percent of the polyalkylene terephthalate polymer and from about 0.1 to about 2.5 weight percent of the fatty acid amide.

6. A thermoplastic composition as defined by any one of claims 1 to 5, wherein the polyphenylene ether polymer comprises poly(2,6-dimethyl-1,4-phenylene) ether.

7. A thermoplastic composition as defined by any one of claims 1 to 5, wherein the polyphenylene ether polymer comprises poly(2,3,6-trimethyl-1,4-phenylene) ether.

8. A thermoplastic composition as defined by any of claims 1 to 5, wherein the polyphenylene ether comprises a copolymer of or a blend of polymers formed from 2,6-dimethyl-1,4-phenylene ether and 2,3,6-trimethyl-1,4-phenylene ether.

9. A thermoplastic composition as defined by any one of claims 1 to 8, wherein the polyphenylene ether is epoxy-functionalized.

**10.** A thermoplastic composition as defined by any one of claims 1 to 8, wherein the polyphenylene ether is phosphate-functionalized.

**11.** A thermoplastic composition as defined by any one of claims 1 to 8, wherein the polyphenylene ether is orthoester functionalized.

**12.** A thermoplastic composition as defined by any preceding claim, wherein the polyalkylene terephthalate polymer comprises polybutylene terephthalate.

**13.** A thermoplastic composition as defined by any one of claims 1 to 11, wherein the polyalkylene terephthalate polymer comprises polyethylene terephthalate.

**14.** A thermoplastic composition as defined by any preceding claim, wherein the fatty acid amide is formed from at least one fatty acid having from about 14 to 22 carbon atoms.

**15.** A thermoplastic composition as defined by any preceding claim, wherein the fatty acid amide is formed from at least one unsaturated fatty acid.

**16.** A thermoplastic composition as defined by any preceding claim, wherein the fatty acid amide is selected from the group consisting of stearamide, arachidamide, behenamide, oleamide, erucamide, stearyl erucamide, erucyl erucamide, oleyl palmitamide, stearyl stearamide and erucyl stearamide.

**17.** A thermoplastic composition as defined by claim 16, wherein the fatty acid amide is oleyl palmitamide.

**18.** A thermoplastic composition as defined by any preceding claim, further comprising from about 1 to about 35 weight percent polycarbonate.

**19.** A thermoplastic composition as defined by any preceding claim, further comprising an impact modifier.

**20.** A thermoplastic composition as defined by any preceding claim, further comprising a vinyl aromatic polymer.

**21.** A thermoplastic composition as defined by claim 20, wherein the vinyl aromatic polymer comprises a rubber-modified polystyrene polymer.

**22.** A thermoplastic composition as defined by claim 20, wherein the vinyl aromatic polymer comprises a block copolymer of a vinyl aromatic monomer and an alkene hydrocarbon monomer or a conjugated diene monomer.

**23.** A thermoplastic composition as defined by claim 22, wherein the vinyl aromatic polymer comprises a radial block copolymer of polymerized vinyl aromatic monomer and polymerized conjugated diene monomer.

**24.** A thermoplastic composition as defined by claim 22, wherein the block copolymer comprises a styrene-butadiene-styrene block copolymer.

**25.** A thermoplastic composition as defined by claim 22, wherein the block copolymer is hydrogenated.

**26.** A thermoplastic composition as defined by any one of claims 20 to 25, comprising from about 1 to about 30 weight percent of the vinyl aromatic polymer.

European Patent Office

# EUROPEAN SEARCH REPORT

Application Number

EP 92 31 1458

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | US-A-4 831 087 (BROWN)<br>* claims 1-11 *<br>--- | 1,4-13, 18 | C08L71/12<br>C08L67/02<br>C08K5/20<br>//(C08L71/12, 67:02)<br>(C08L67/02, 71:12) |
| A | EP-A-0 427 115 (GENERAL ELECTRIC COMPANY)<br>* page 8, line 21 - page 8, line 33; claims 1-18 *<br>--- | 1,4-11, 18-26 | |
| A | GB-A-2 203 162 (D.G. INDUSTRIES LIMITED)<br>* the whole document *<br>----- | 1-3, 14-17 | |

TECHNICAL FIELDS SEARCHED (Int. Cl.5)

C08L
C08K

The present search report has been drawn up for all claims

| Place of search | Date of completion of the search | Examiner |
|---|---|---|
| THE HAGUE | 07 APRIL 1993 | GLANDDIER A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)